Europäisches Patentamt

European Patent Office

Office européen des brevets

(19)

(11) Publication number: **0 159 002**
**B1**

## EUROPEAN PATENT SPECIFICATION

(12)

(45) Date of publication of patent specification: **19.07.89**

(51) Int. Cl.⁴: **G 01 N 15/02**

(21) Application number: **85104541.9**

(22) Date of filing: **15.04.85**

(54) **A device for separating airborne particles into grain size classes.**

(30) Priority: **19.04.84 IT 343384**

(43) Date of publication of application:
**23.10.85 Bulletin 85/43**

(45) Publication of the grant of the patent:
**19.07.89 Bulletin 89/29**

(84) Designated Contracting States:
**DE FR GB NL**

(56) References cited:
**US-A-4 159 942**
**US-A-4 301 002**

**JOURNAL OF AEROSOL SCIENCE, vol. 101,
1979, pages 411-419, Pergamon Press Ltd., GB;
V. PRODI et al.: "An inertial spectrometer for
aerosol particles"**

(73) Proprietor: **Prodi, Vittorio
Via Martinelli, 7
I-40137 Bologna (IT)**

(72) Inventor: **Prodi, Vittorio
Via Martinelli, 7
I-40137 Bologna (IT)**

(74) Representative: **Bongiovanni, Guido et al
c/o Ingg. Carlo e Mario Torta Via Viotti 9
I-10121 Torino (IT)**

Courier Press, Leamington Spa, England.

## Description

The present invention relates to a device for separating airborne particles, such as particles of an aerosol, into classes by grain size.

The devices which are currently available have been conceived to measure the distribution of the particles. In fact, these are instruments which separate the particles still in suspension in air (aerosol) and which collect them on a filter maintaining the separation. Upon deposition it is then possible to perform all the analyses required from time to time for industrial and environmental health, medical physics, and powder technology generally, to obtain grain size separation of the aerosol. Such devices generally comprise a channel of rectangular section and of L-shape form through which filtered air passes; the particle-bearing air is injected into the first part of the channel upstream of the curvature which separates the first part from the second: upon passing the sharp curvature of the channel the particles tend by inertia to maintain their velocity in sense and direction, but are carried along by the flow. The particles having the same dimension become disposed in the same streamline which comes into contact with a well defined region of the filter; therefore such particles are separated from the initial flow of fluid by a distance which is a function only of aerodynamic diameter and the filter collects the particles which are arranged in different positions according to their aerodynamic dimensions.

In Journal of Aerosol Science, Volume 101, 1979, pag. 411—419, Pergamon Press Ltd., GB, it is described an apparatus consisting of a channel of the rectangular section with a 90° bend. Clean air is drawn through the channel with a thin aerosol sheath injected upstream of the bend and a suction is exerced downstream of a membrane filter disposed in the path of the air and substantially perpendicular to the axis of the abovementioned channel. Due to the bend, the particles are separated according to their size leaving the original streamline by a distance which is unique function of particle inertia and resistance. In this way the particle fractions are captured on the filter on which they are arranged in different positions. The object of the present invention is to provide a device of the first indicated type which can separate airborne particles, particularly particles of an aerosol, into grain size classes, which allow to isolate particles of one or more grain size classes from the others without deposition of them on a membrane filter but maintaining them in suspension.

Devices for separating airborne particles, in particular particles of an aerosol, into classes by grain size, and operating on the ground of the same concept are described in the European Patent application of the Applicant no. 85 104540 (EP—A—159646), 85 104542 (EP—A—159647) and 85 104543 (EP—A—159648).

Further objects and advantages of the present invention will become apparent from the following description. According to the present invention is provided a device for separating airborne particles into grain size classes comprising:

— a first base body formed as an upwardly open cup and means to create, in use of the device, a depression in said cup,

— a first channel formed in a second upper body, having a substantially L-shaped configuration and consisting of a first cavity for conveying, in use of the device, a flow of filtered air, said first cavity having a decreasing width from the top towards the bottom, and a second cavity facing the entrance of said cup of said first body and communicating by means of a sharp curvature with said first cavity and

— a nozzle positioned in said first cavity for ejecting thereinto, close to said curvature, a quantity of particle-bearing air,

characterized in that in said first body are formed, successively in the flow direction, at least first, second and third upwardly open chambers and in that the device comprises means to create, in use of the device, depressions of different predetermined values in said chambers.

For a better understanding of the present invention a preferred embodiment will now be described, purely by way of non limitative example, with reference to the attached drawings in which there is illustrated a partial section of a device operable to separate airborne particles into grain size classes, and generally indicated with the reference numeral 1. The device 1 comprises a base body 2 of cup-shaped form having a cylindrical base wall 3 from the lateral edge of which extends upwardly a lateral wall 4 of cylindrical shape. From the upper end of this lateral wall 4 extend outwardly, parallel to the said base wall 3, an annular projection 5. Within the body 2 there are formed three concentric annular chambers, respectively indicated 7, 8 and 11. From the central zone of the upper surface of the base wall 3 extends, upwardly, a cylindrical element 12; from the upper surface of the base 3, moreover there extends upwardly two annular elements 13 and 14 concentric with the element 12 and of which that indicated 14 lies within the other. The chamber 7, which is the outermost, is delimited by the inner surface of the lateral wall 4 and by the outer surface of the element 13, the chamber 8 is delimited by the inner surface of the element 13 and the outer surface of the element 14, and the chamber 11, which is the innermost, is delimited by the inner surface of the element 14 and by the outer surface of the element 12.

In use a vacuum is created in the chambers 7, 8 and 11, with different values in each chamber. For this, each chamber 7, 8 and 11 communicate with a respective pump operating to create this depression. On the side wall 4 there is formed a threaded radial through hole 15 into which is screwed a threaded portion 16 of a first pipe union 17 an outer portion 18 of which projects radially from the hole 15 to support the end of a duct, not illustrated, operable to put a first pump into communication with the chamber 7. On the upper surface of the base wall 3 there is formed an annular groove 21 which houses the lower ends of the elements 13 and 14. In the groove 21 in the wall 3 there is formed a threaded through hole 22 engaged by a threaded upper portion 23 of a second pipe union 24 a lower portion 25 of which projects downwardly from the hole 22 to support the end of a duct, not illustrated, operable to put a second pump into communication with the chamber 8. From the portion 23 a projection 26 extends, towards the interior of the groove 21, acting to maintain the elements 13 and 14 spaced from one another. In correspondence with the central zone of the lower surface of the base wall 3 there is formed a cavity 27 communicating with the chamber 11 by means of a passage 28. Around whe lateral edge of the cavity 27 there is fixed a small plate 31 having a central threaded through hole 32 engaged by an upper portion 33 of a third pipe union 34 a lower portion 35 of which extends downwardly and supports the end of a duct, not illustrated, operable to put a third pump into communication with the chamber 11.

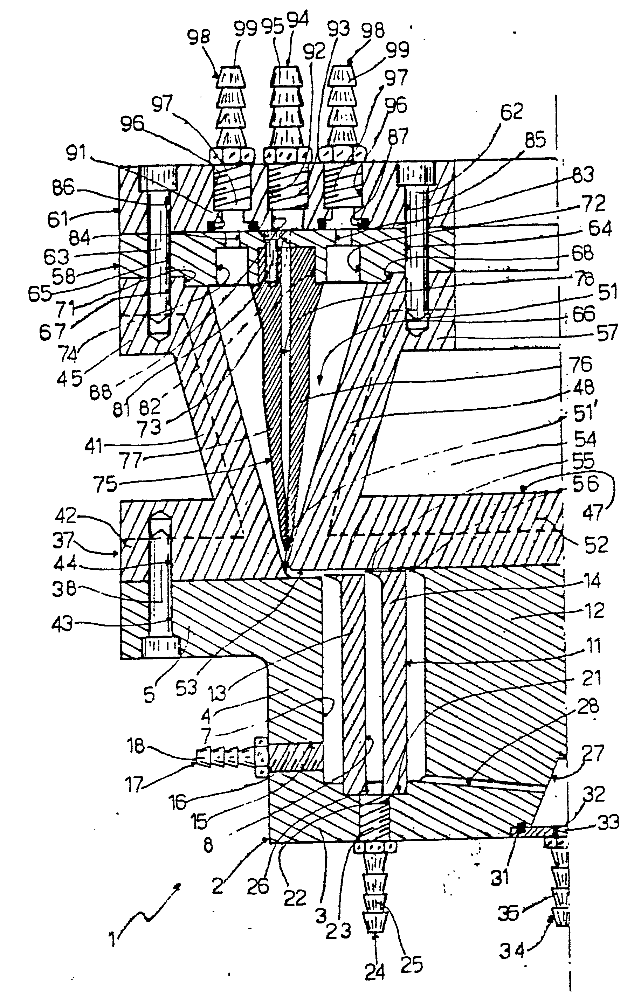

As illustrated in the attached drawing the device 1 includes an annular body 37 coaxial with the body 2 and fixed to this by screws 38. The body 37 has a central portion 41 of substantially frusto-conical form and of constant thickness, with the upper end being of greater diameter. From the lower end of the portion 41 an annular projection 42 extends outwardly and its lower surface faces the upper surface of the projection 5 of the body 2. The projection 5 has a plurality of through holes 43 coaxial with a corresponding number of blind threaded holes 44 formed in the projections 42. The screws 38 first engage the holes 43 and subsequently are screwed into the holes 44. From the upper end of the portion 41 a second annular projection 45 extends outwardly parallel to the projection 42.

The device 1 further includes an annular body 47 coaxial with the body 37 and inside this latter. The body 47 has a central portion 48 of substantially frusto-conical form and of constant thickness, with its smaller diameter end uppermost. The inner surface of the portion 41 of the body 37 and the outer surface of the portion 48 of the body 37 define an annular channel 51 having a decreasing width from the top towards the bottom. The lower end of the portion 48 is fixed to the perimetral edge of a cylindrical plate 52 parallel to the base wall 3 of the body 2 and the lower surface of which rests on the upper wall of the cylindrical element 12. This latter extends beyond the upper end of the lateral wall 4 of the body 2 and therefore the plate 52 resting on the element 12 defines an annular cavity 53 between its lower surface and the upper end of the wall 4. It is to be noted that the annular element 13 extends beyond the upper end of the wall 4 and that the annular element 14 extends beyond the upper end of the element 13; the upper ends of the elements 13 and 14 are therefore separated by different distances from the lower surface of the plate 52. The elements 13, 14 and 12 have an upper end from which extends, outwardly, a respective annular projection 54, 55 and 56 which is tapered with a decreasing thickness and the upper face of which is coplanar with the upper face of the respective elements 13, 14 and 12. The outer ends of the projections 54, 55 and 56 define with the corners of the upper ends, respectively, of the wall 4, the element 13 and the element 14, the mouths of the chambers 7, 8 and 11 which can put these into communication with the cavity 53. It is to be noted further that the cavity 53 communicates with the channel 51 by the fact that the lower ends of the portions 41 and 48 are of different diameter and therefore define an annular outlet mouth indicated 51' and hereinafter called for simplicity an outlet; the corners of such ends are rounded to render the passage from the channel 51 to the channel 53 gradual. From the upper end of the portion 48 an annular projection 57 extends inwardly coplanar with the projection 45.

The device 1 includes two annular plates 58 and 61 coaxial with one another and with the bodies 37 and 47. In particular the inner rims of the plates 58 and 61 are fixed by screws 62 to the projection 57 of the body 47 and the outer rims of these are fixed by screws 63 to the projection 45 of the body 37. The plate 58 rests directly on the upper surface of the projections 45 and 57 and in this respect has an inner ring of through holes 64 and an outer ring of through holes 65. The holes 64 are co-axial with a corresponding number of blind threaded holes 66 formed in the projection 57 and the holes 65 are co-axial with corresponding holes 67 formed in the projection 45. A central ring of the plate 58 has a greater thickness than the inner and outer rims. The inner and outer edges of this central ring rest, respectively, on an annular recess 68 formed at the upper end of the portion 48 and on an annular recess 71 formed at the upper end of the portion 41. The lower surface of the central ring of the plate 58 faces the channel 51 und has three annular grooves respectively indicated 72, 73 and 74. The grooves 72 and 74 are respectively the innermost and outermost and have the same width. The groove 73, which is between groove 72 and groove 74, has a greater width than the others and houses the upper end of a nozzle 75 constituted by two annular bodies 76 and 77 co-axial with one another and with the bodies 37 and 47; the body 76 is within the body 77 and defines with this an annular channel 78. The bodies 76 and 77 are fixed to the plate 58 at their upper ends by means of a plurality of screws 81 only one of which is illustrated for simplicity and is shown fixing the body 77 to the plate 56. Along the groove 73 in the plate 58 there is formed a plurality of through holes 82 (one of which is illustrated in broken outline in the attached drawing) which open into the channel 78. Along the grooves 72 and 74 in the plate 58 there is formed a respective plurality of through holes 83 and 84.

The plate 61 rests on the plate 58 and has a ring of through holes 85 coaxial with the holes 64 and a ring of through holes 86 coaxial with the holes 65. Each screw 62 engages in succession a hole 85 and a hole 64 and is screwed into the hole 66. Each screw 63 engages in succession into a hole 86 and a hole 65 and is screwed into a hole 67. The central ring of the plate 61, which, corresponds to the central ring of the plate 58, has on its lower surface three annular grooves 87, 88 and 91 the groove 87 of which is in communication with the holes 83, the groove 88 of which is in communication with the holes 82, and the groove 91 of which is in communication with the holes 84. Along the groove 88 in the plate 61 there are formed threaded holes 92 into which there is screwed a lower threaded portion 93 of a respective pipe union 94 having an upper portion 95 extending upwardly and supporting the end of a duct, not illustrated, which via the groove 88 and the holes 82, puts the channel 78 into communication with a source of aerosol which could be the environment itself. Along the grooves 87 and 91 are formed respective threaded holes 96 into which are screwed the lower portions 97 of respective pipe unions 98 each having an upper portion 99 extending upwardly. The pipe unions 98 are connected to a source of filtered air via respective ducts not illustrated, which air is conveyed into the channel 51 via the grooves 72 and 74.

The technique for the separation of aerosol particles into grain size classes is known and is described in various scientific publications. It consists in the fact that, as already indicated, the particles flowing past a sharp curvature (outlet 51') tend by inertia to maintain their velocity in direction and sense, and therefore downstream of the curvature itself are separated into various bands of fluid according to their aerodynamic diameter. For the correct operation of the device 1, that is for a better separation of the particles into various grain size classes, the longitudinal axis of a representative section of the nozzle 75 is offset towards the outer surface of the portion 48. This characteristic has been shown experimentally to be valid and is described in the said publications.

The operation of the device 1 is as follows.

In detail, filtered air from a suitable source is introduced into the channel 51 and a quantity of aerosol from a second source, which could be the environment itself, is injected via the nozzle 75 into the channel 51 close to the outlet 51'. This is possible, for example, by creating a depression in the chamber 7, 8 and 11 which draws in the filtered air and the aerosol. The fluid constituted by filtered air and aerosol flows past the sharp curvature (51') where the particles of dust present in the aerosol separate out from one another in dependence on their aerodynamic diameter into various bands of fluid, that is all the particles of the same grain size class will be present within their streamline. If a filter had been positioned in place of the elements 13, 14 and 12 the particles would be deposited on this starting from the particles of greater diameter. Since there is no filter there, it will happen in the device 1, that the depression in the chambers 7, 8 and 11 being equal, the particles which belong to the grain size classes of greater diameter will flow into the chamber 7 whilst the particles of medium diameter will flow into the chamber 8 and the particles of smallest diameter will flow into the chamber 11. By playing with the values of the depression in the chambers 7, 8 and 11 it is possible to isolate the particles of the classes which flow, for example, into the chamber 8. In fact, if there is created in the chamber 8 a pressure having an absolute value of less than that of the chamber 7 the particles of some grain size classes with greater diameter particles will flow into the chamber 8; in other words by varying the depression within the chambers 7, 8 and 11, particles belonging to grain size classes which range from those of larger diameter to those of smaller diameter will be brought together in the chamber 8, which is that which is of greatest interest here. With the device 1 it is possible therefore to isolate particles of a single class or several classes, thus obtaining particles of homogeneous diameter. If a device similar to the device of the invention but having a filter inserted is put in cascade with it, particles belonging to the predetermined class or classes are deposited on the filter and therefore isolated by this from the others; with deposition thus obtained it is then possible to effect all the analyses necessary for the determination of the characteristics of such particles. It is natural that the particles of the isolated classes will be deposited on the filter according to sub-classes and therefore from the deposition it is possible to have all the information on the characteristics of such classes.

In the chambers 7, 8 and 11, it is possible to take an optical reading for the determination in real time of the quantity of particles which traverse the chambers 7, 8 and 11. For such optical reading a photometer can be used, for example of the laser beam type to be housed in a suitable recess formed in one of the surfaces which delimit the chamber of interest.

From what has been explained above the advantages which flow from the present invention will be apparent.

In particular, with the device of the invention it is possible to isolate particles of one or more grain size classes from the others without deposition. It is therefore possible to utilise such device as a source of particles of a particular grain size class; if the device itself is put in cascade with a similar device having a filter it is possible to collect information relating to the class which is deposited on the filter in subclasses. It is also apparent, therefore, that by utilising the device as a source of particles it is possible to calibrate filter devices for a correct determination of the calibration curve of these latter.

Finally, it is clear that the device described and illustrated here can be modified and varied without by this departing from the scope of the claims.

In particular, the geometry of the bodies 2, 37 and 47 and the nozzle 75 can be different from that described whilst remaining within the principal of providing the body 2 with several chambers, for example, 3 chambers even non-annular ones, but in which a different value of depression is created. For example the channel 51 and the nozzle 75 could have a pyramid geometry as provided in devices currently in commercial use; analogously the interior of the body 2 could be of prismatic geometry and the elements 13, 14 and 12 transformed into normal flat dividing walls. It is also important to note that the device can utilise the upper part (bodies 37 and 47) of a device of the same type but provided with a filter by coupling this latter to a lower part (body 2) in which the chambers 7, 8 and 11 are formed.

## Claims

1. A device for separating airborne particles into grain size classes comprising:
— a first base body (2) formed as an upwardly open cup and means to create, in use of the device, a depression in said cup,
— a first channel (51, 53) formed in a second upper body (37, 47), having a substantially L-shaped configuration and consisting of a first cavity (51) for conveying, in use of the device, a flow of filtered air, said first cavity (51) having a decreasing width from the top towards the bottom, and a second cavity (53) facing the entrance of said cup of said first body (2) and communicating by means of a sharp curvature (51') with said first cavity (51) and
— a nozzle (75) positioned in said first cavity (51) for ejecting thereinto, close to said curvature (51'), a quantity of particle-bearing air,
characterised in that in said first body (2) are formed, successively in the flow direction, at least, first, second and third upwardly open chambers (7, 8, 11) and in that the device comprises means to create, in use of the device, depressions of different predetermined values in said chambers (7, 8, 11).

2. A device according to Claim 1, characterised by the fact that the said first body (2) includes a base wall (3) from which upwardly extends a first dividing wall (13) defining, with a side wall (4) of the said first body (2) the said first chamber (7), a second dividing wall (14) defining with the said first dividing wall (13), the said second chamber (8), and a third wall (12) defining, with the said second dividing wall (14), the said third chamber (11).

3. The device according to Claim 2, characterised by the fact that the upper end of the said first dividing wall (13) is higher than the upper end of the said side wall (4), the upper end of the said second dividing wall (14) is higher than the first dividing wall (13), and the upper end of the said third wall (12) is higher than the second dividing wall (14), the lower surface of a base plate (52) of the said second body (37 and 47) resting on the upper end of the said third wall (12) and defining, with the upper end of the said side wall (4), the said second cavity (53).

4. A device according to Claim 5, characterised by the fact that a respective tapered projection (54, 55 and 56) extends towards the said side wall (4) from the upper end of the said first and second dividing walls (13, 14) and the said third wall (12) in such a way as to delimit and facilitate the ingress into the said respective first second and third chambers (7, 8, 11).

5. A device according to Claim 4, characterised by the fact that the said first body (2) has a cylindrical geometry and the said base wall (3) has a circular outline and the said side wall (4) has a cylindrical form; the said first dividing wall (13) is of cylindrical form, the said second dividing wall (14) is inside and concentric to this latter, and is also of cylindrical form, and the said third inner wall is concentric to this latter and is constituted by a cylindrical element (12), all extending upwardly from the upper surface of the said base wall (3) in such a way that the said first, second and third chambers (7, 8, 11) are of annular form.

6. A device according to Claim 5, characterised by the fact that the said first body (2) has a first hole (15) engaged by a portion (16) of a first pipe union (17) able to put the said first chamber (7) in communication with a first member operable to create a depression therein, a second hole (22) engaged by a portion (23) of a second pipe union (24) able to put the said second chamber (8) into communication with a second member operable to create a depression therein, and a third hole (32, 27, 28) engaged by a portion (23) of a third pipe union (34) able to put the said third chamber (11) into communication with a third member operable to create a depression therein.

7. A device according to Claim 5 and/or Claim 6, characterised by the fact that the said second body comprises:
a first annular element (37) fixed to the said first body (2) in correspondence with the upper face of the said side wall (4) and having a central portion (41) describing with its inner surface the lateral surface of a frusto-conical solid with the larger diameter section positioned higher than the said central portion (41); and
a second annular element (47) within the said first annular element (37) and comprising a base plate (52) with a central portion (48) extending upwardly from the lateral edge of the said base plate (52) and describing with its outer surface the lateral surface of a frusto-conical solid with the larger diameter section positioned lowermost in such a way as to define, with the inner surface of the said central portion (41) of the said first annular element (37), the said first cavity (51) which thus has an annular form and communicates with the said second cavity (53) via the said curvature (51') formed by suitably joining the lower ends of the said lateral portions (43 and 48) respectively of the said first and second annular elements (37, 47); the said nozzle (75) also being of annular form.

8. A device according to Claim 7, characterised by the fact that the said nozzle (75) includes two third annular elements (76 and 77) one within the other and defining between them a second channel (78) communication with a source of particle-bearing air.

9. A device according to Claim 8, characterised by the fact that the said nozzle (75) is disposed in the said first cavity (51) in such a way as to be close to the said central portion (48) of the said second annular element (47).

10. A device according to Claim 8 and/or Claim 9, characterised by the fact that the said third annular elements (76 and 77) are supported by a first plate (58) positioned above the said first and second annular elements (37 and 47) and fixed to these in such a way that the said first annular element (37) supports the said second annular element (47) via the said first plate (58).

11. A device according to Claim 10, characterised by the fact that it includes a second plate (61) positioned above the said first plate (58) and in which is formed a fourth hole (92) engaged by a portion (93) of a fourth pipe union (94) connected to the source of particle-bearing air; the said fourth hole (92) being in communication with the said second channel (78) via a plurality of fifth holes (82) formed in the said first plate (58).

12. A device according to Claim 11, characterised by the fact that at least one sixth hole (96) is formed in the said second plate (61) and engaged by a portion (97) of a fifth pipe union (98) connected to the source of filtered air; the said sixth hole (96) being in communication with the said first cavity (51) via a plurality of seventh holes (83 and 84) formed in the said first plate (58).

13. A device according to Claim 12, characterised by the fact that the said first plate (58) has on its lower surface facing the said first cavity (51) a first groove (73) in which are fixed the upper ends of the said third annular elements (76 and 77); the said fifth holes (82) being formed in the said first groove (73) and communicating below with the said second channel (78) and above, via a second annular groove (88) formed on the lower surface of the said second plate (61), with the said fourth hole (92) formed in the said second groove (88).

14. A device according to Claim 13, characterised by the fact that the said first plate (58) has, on its lower surface facing the said first cavity (51), at least one third annular groove (72, 74) concentric with the said first groove (73) and open towards the said first cavity (51); the said seventh holes (83 and 84) being formed in the said third groove (72 and 74) and communicating above, via a fourth annular groove (87 and 91) formed in the lower surface of the said second plate (61) concentrically with the said second groove (88), with the said sixth hole (96) formed in the said fourth groove (87 and 91).

**Patentansprüche**

1. Vorrichtung zur Trennung von in der Luft schwebenden Teilchen nach Kornmessklassen, die folgendes umfasst:
— eine erste Basis (2) in Form einer nach oben hin geoeffneten Kugelhaube sowie Mittel, um bei Anwendung der Vorrichtung einen Unterdruck in besagter Kugelhaube herzustellen.
— einen ersten Kanal (51, 53), der sich in einem zweiten, oberen Koerper (37, 53) mit L-Form befindet und einen ersten Hohlraum (51) umfasst, um waehrend der Anwendung der Vorrichtung einen gefilterten Luftstrom zu befoerdern, wobei dieser erste Hohlraum (51) eine von oben nach unten abnehmende Breite aufweist, und einen zweiten Hohlraum (53), der dem Eingang der o.g. Kugelhaube des ersten Koerpers (2) gegenueberliegt und ueber eine sich verengende Kruemmung (51') mit dem ersten Hohlraum (51) verbunden ist, und
— eine Leitung (75), die sich im ersten Hohlraum (51) befindet, um im Innern des letzteren, in der Naehe besagter Kruemmung (51'), eine bestimmte, Teilchen transportierende Luftmenge zu verbreiten, gekennzeichnet durch die Tatsache, dass sich im ersten Koerper (2) nacheinander und der Gleitrichtung folgend zumindest eine erste, zweite und dritte nach oben hin offene Kammer (7, 8, 11) bildet sowie dadurch, dass die Vorrichtung Mittel umfasst, um bei ihrer Anwendung in den besagten Kammern (7, 8, 11) Unterdruecke eines vorbestimmten Wertes herzustellen.

2. Vorrichtung gemaess Anspruch 1, gekennzeichnet durch die Tatsache, dass der erste Koerper (2) eine Basiswand (3) umfasst, von der aus sich nach oben eine erste Trennwand (13) ausdehnt, die mit einer Seitenwand (4) des ersten Koerpers (2) die erste Kammer (7) begrenzt, eine zweite Trennwand (14) mit der ersten Trennwand (13) die zweite Kammer (8) begrenzt und eine dritte Wand (12) mit der zweiten Trennwand (14) die dritte Kammer (11) begrenzt.

3. Vorrichtung gemaess Anspruch 2, gekennzeichnet durch die Tatsache, dass das obere aeussere Ende der ersten Trennwand (13) hoeher als das obere aeussere Ende der Seitenwand (4) ist, das obere aeussere Ende der zweiten Trennwand (14) hoeher als die erste Trennwand (13) ist und das obere aeussere Ende der dritten Wand (12) hoeher als die zweite Trennwand (14) ist, wobei die untere Oberflaeche einer Grundplatte (52) des zweiten Koerpers (37, 47) auf dem oberen aeusseren Ende der dritten Wand (12) aufliegt und mit dem oberen aeusseren Ende der Seitenwand (4) den zweiten Hohlraum (53) begrenzt.

4. Vorrichtung gemaess Anspruch 3, gekennzeichnet durch die Tatsache, dass ein entsprechender konischer Vorsprung (54, 55, 56) sich zu Seitenwand (4) hin ausdehnt, und zwar ab dem oberen aeusseren Ende der ersten und zweiten Trennwand (13, 14) und der dritten Wand (12), so dass der jeweilige eigngang zu der ersten, zweiten und dritten Kammer (7, 8, 11) begrenzt und erleichtert wird.

5. Vorrichtung gemaess Anspruch 4, gekennzeichnet durch die Tatsache, dass der erste Koerper (2) eine zylindrische Geometrie aufweist, die besagte Basiswand (3) einen kreisfoermigen Umriss, die o.g. Seitenwand (4) eine zylindrische Form, die besagte erste Trennwand (13) eine zylindrische Form hat, die besagte zweite Trennwand (13) sich im Innern befindet und konzentrisch im Vergleich zu letzterer ist und aus einem zylindrischen Element besteht (12), wobei sich alle diese Waende nach obne ausdehnen, ausgehend von der oberen Oberflaeche der Basiswand (3), so dass die erste, zweite und dritte Kammer (7, 8, 11) eine Ringform annehmen.

6. Vorrichtung gemaess Anspruch 5, gekennzeichnet durch die Tatsache, dass der erste Koerper eine erste Oeffnung (15) aufweist, die durch den Teil (16) eines ersten Anschlussrohrs (17) gekuppelt wird, das die erste Kammer (7) mit einem ersten Element fuer fuer die Herstellung des Unterdrucks im Innern derselben verbinden kann, eine zweite Oefnnung (22) die durch Teil (23) eines zweiten Anschlussrohrs (24) gekoppelt wird, das fuer die Verbindung der zweiten Kammer (8) mit einem zweiten Element bestimmt ist, das einen Unterdruck im Innern derselben herstellt, und eine dritte Oeffnung (32, 27 28), durch eine Seite eines dritten Anschlussrohrs (34) gekoppelt, das die dritte Kammer (11) mit einem dritten Element zwecks Herstellung eines Unterdrucks im Innern dieser Kammer verbindet.

7. Vorrichtung gemaess einem der Ansprueche 5 oder 6, gekennzeichnet durch die Tatsache, dass der zweite Koerper folgendes umfasst:

— ein erstes, ringfoermiges Element, das an einem ersten Koerper (2) in Uebereinstimmung mit der oberen Seite der Seitenwand (4) befestigt ist und einen Mittelteil (41) aufweist, der mit seiner Innenoberflaeche die seitliche Oberflaeche eines raeumlichen Kegelstumpfwinkels zeichnet, dessen groesster Durchmesserquerschnitt hoeher als der besagte Mittelteil (41) liegt, und

— ein zweites, ringfoermiges Element (47) im Innern des ersten ringfoermigen Elements (37), das eine Grundplatte (52) mit einem Mittelteil (48) umfasst, der sich ab dem seitlichen Rand der Grundplatte (52) nach oben ausdehnt und mit seiner Aussenoberflaeche die seitliche Oberflaeche eines raeumlichen Kegelstumpfwinkels, dessen groesster Durchmeserquerschnitt tiefer liegt, zeichnet, so dass mit der Innenoberflaeche des Mitteteils (41) des ersten ringfoermigen Elements (37) der besagte erste Hohlraum (51) begrenzt wird, der auf diese Weise eine Ringform annimmt und mit dem zweiten Hohlraum (53) durch die besagte Kruemmung (51') verbunden ist, die sich dadurch bildet, dass die unteren Enden der o.g. Seitenteile (43, 48) jeweils des ersten und zweiten ringfoermigen Elements (37, 47) miteinander verbunden werden, wobei die besagte Leitung ebenfalls ringfoermig ist (75).

8. Vorrichtung gemaess Anspruch 7, gekennzeichnet durch die Tatsache, dass die o.g. Leitung (75) zwei dritte ringfoermige Elemente umfasst (76, 77), von denen sich eins im anderen befindet, und die miteinander einen zweiten Kanal (78) bilden, der mit einer Teilchen transportierenden Luftquelle in Verbindung steht.

9. Vorrichtung gemaess Anspruch 8, gekennzeichnet durch die Tatsache, dass die o.g. Leitung (75) im ersten Hohlraum angeordnet ist (51), und zwar so, dass sie in der Naehe der Mittelteils (48) dzs zweiten ringfoermigen Elements (47) zu liegen kommt.

10. Vorrichtung gemaess einem der Ansprueche 8 oder 9, gekennzeichnet durch die Tatsache, dass die o.g. dritten ringfoermigen Elemente (76, 77) durch eine erste Platte (58) gehalten werden, die sich auf dem ersten und zweiten ringfoermigen Element befindet (37, 47) und an diesen befestigt ist, und zwar so, dass das erste ringfoermige Element (37) das zweite ringfoermige Element (47) mittels der ersten Platte (58) stuetzt.

11. Vorrichtung gemaess Anspruch 10, gekennzeichnet durch die Tatsache, dass sie eine zweite Platte (61) umfasst, die ueber der besagten ersten Platte (58) liegt und in der sich eine vierte Oeffnung (92) befindet, die mit einem Teil (93) des vierten Anschlussrohrs (94) angekuppelt ist, das mit der Quelle der teilchentragenden Luft verbunden ist, wobei diese vierte Oeffnung (92) mit dem besagten zweiten Kanal (78) mittels mehrerer fuenften Oeffnungen (82), die sich in der ersten Platte (58) befinden, verbunden ist.

12. Vorrichtung gemaess Anspruch 11, gekennzeichnet durch die Tatsache, dass mindestens eine sechste Oeffnung (96) sich in der zweiten Platte (61) befindet und durch einen Teil (97) eines fuenften Anschlussrohrs (98) angekuppelt wird, das mit der gefilterten Luftquelle verbunden ist, wobei diese sechste Oeffnung (96) mit dem ersten Hohlraum (51) mittels mehrerer siebter Oeffnungen (83, 84), die sich in der ersten Platte (58) befinden, verbunden ist.

13. Vorrichtung gemaess Anspruch 12, gekennzeichnet durch die Tatsache, dass die erste Platte (58) an ihrer dem o.g. ersten Hohlraum (51) gegenueberliegenden Innenoberflaeche eine erste Nute (73) aufweist, in der die oberen Enden der besagten dritten ringfoermigen Elemente (76, 77) befestigt sind, wobei sich die o.G. fuenften Oeffnungen (82) in dieser Nute befinden (73) und darunter mit dem zweiten Kanal (78), darueber mittels einer zweiten ringfoermigen Nute (88), die sich auf der unteren Oberflaeche der zweiten Platte (61) befindet, in Verbindung stehen, und die o.g. vierte Oeffnung (92) sich in der zweiten Nute (88) bildet.

14. Vorrichtung gemaess Anspruch 13, gekennzeichnet durch die Tatsache, dass die erste Platte (58) auf ihrer unteren, dem o.g. ersten Hohlraum (51) gegenueberliegenden Oberflaeche mindestens eine dritte ringfoermige Nute (72, 74) aufweist, die sich zur ersten Nute (73) konzentrisch verhaelt und nach oben hin zum ersten Hohlraum (51) offen ist, die besagten siebten Oeffnungen (83, 84) sich in dieser dritten ringfoermigen Nute (72, 74) gebildet haben und oben durch eine vierte ringfoermige Nute (87, 91), die sich in der unteren Oberflaeche der zweiten Platte (61) befindet, konzentrisch im Vergleich zur zweiten Nute (88) mit der o.g. sechsten Oeffnung verbinden, die sich in dieser vierten Nute (87, 91) gebildet hat.

## Revendications

1. Dispositif pour séparer des particules en suspension dans l'air suivant des classes de taille de grain comprenant:

— une première embase (2) conformée en coupelle ouverte vers le haut et des moyens pour créer, lors de l'utilisation du dispositif, une dépression dans ladite coupelle,

— un premier canal (51, 53) formé dans un second corps supérieur (37, 47) conformé en L et comprenant une première cavité (51) pour transporter, lors de l'utilisation du dispositif, un flux d'air filtré, cette première cavité (51) ayant une largeur décroissante du haut vers le bas et une seconde cavité (53) faisant face à l'entrée de ladite coupelle du premier corps (2) et communiquant au moyen d'une courbure effilée (51') avec la première cavité (51) et

— une buse (75) placée dans la première cavité (51) pour diffuser à l'intérieur de celle-ci, près de ladite courbure (51'), une quantité d'air transportant des particules, caractérisé en ce que, dans le premier corps (2), sont formées, successivement suivant la direction d'écoulement, au moins des première, seconde et troisième chambres ouvertes vers le haut (7, 8, 11) et en ce que le dispositif comprend des moyens pour créer, lors de l'utilisation du dispositif, des dépressions de valeur prédéterminée dans lesdites chambres (7, 8, 11).

2. Dispositif selon la revendication 1, caractérisé en ce que le premier corps (2) comprend une paroi de base (3) à partir de laquelle s'étend vers le haut une première paroi séparatrice (13) définissant avec une paroi latérale (4) du premier corps (2) la première chambre (7), une seconde paroi séparatrice (14) définissant avec la première paroi séparatrice (13) la seconde chambre (8), et une troisième paroi (12) définissant avec la seconde paroi séparatrice (14) la troisième chambre (11).

3. Dispositif selon la revendication 2, caractérisé en ce que l'extrémité supérieure de la première paroi séparatrice (13) est plus élevée que l'extrémité supérieure de la paroi latérale (4), l'extrémité supérieure de la seconde paroi séparatrice (14) est plus élevée que la première paroi séparatrice (13), et l'extrémité supérieure de la troisième paroi (12) est plus élevée que la seconde paroi séparatrice (14), la surface inférieure d'une plaque de base (52) du second corps (37, 47) reposant sur l'extrémité supérieure de la troisième paroi (12) et définissant, avec l'extrémité supérieure de la paroi latérale (4), la seconde cavité (53).

4. Dispositif selon la revendication 3, caractérisé en ce qu'une saillie conique respective (54, 55 et 56) s'étend vers la paroi latérale (4) à partir de l'extrémité supérieure des première et seconde parois séparatrices (13, 14) et de la troisième paroi (12) de manière à délimiter et faciliter l'entrée dans les première, seconde et troisième chambres respectives (7, 8, 11).

5. Dispositif selon la revendication 4, caractérisé en ce que le premier corps (2) a une géométrie cylindrique, ladite paroi de base (3) a un contour circulaire, ladite paroi latérale (4) a une forme cylindrique, ladite première paroi séparatrice (13) a une forme cylindrique, ladite seconde paroi séparatrice (14) est à l'intérieur de et concentrique à cette dernière et est aussi de forme cylindrique, et la troisième paroi interne est concentrique à cette dernière et constituée par un élément cylindrique (12), toutes ces parois s'étendant vers le haut à partir de la surface supérieure de la paroi de base (3) de manière que les première, seconde et troisième chambres (7, 8, 11) soient de forme annulaire.

6. Dispositif selon la revendication 5, caractérisé en ce que le premier corps (2) possède un premier trou (15) engrené par une partie (16) d'un premier tuyau de liaison (17) conçu pour mettre la première chambre (7) en communication avec un premier organe adapté à créer une dépression à l'intérieur de celle-ci, un second trou (22) engrené par une partie (23) d'un second tuyau de liaison (24) conçu pour mettre la seconde chambre (8) en communication avec un second organe adapté à créer une dépression à l'intérieur de celle-ci, et une troisième trou (32, 27, 28) engrené par une partie (33) d'un troisième tuyau de liaison (34) conçu pour mettre la troisième chambre (11) en communication avec un troisième organe adapté à créer une dépression à l'intérieur de cette chambre.

7. Dispositif selon l'une des revendications 5 ou 6, caractérisé en ce que le second corps comprend:

— un premier élément annulaire (37) fixé au premier corps (2) en correspondance avec la face supérieure de la paroi latérale (4) et ayant une partie centrale (41) décrivant avec sa surface interne la surface latérale d'un angle solide tronconique dont la section de diamètre le plus grand est placée plus haut que ladite partie centrale (41) et,

— un second élément annulaire (47) à l'intérieur du premier élément annulaire (37) et comprenant une plaque de base (52) avec une partie centrale (48) s'étendant vers le haut à partir du bord latéral de la plaque de base (52) et décrivant avec sa surface externe la surface latérale d'un angle solide tronconique dont la section de diamètre le plus grand est placée le plus bas de manière à définir avec la surface interne de la partie centrale (41) du premier élément annulaire (37), ladite première cavité (51) qui ainsi possède une forme annulaire et communique avec la seconde cavité (53) par l'intermédiaire de ladite courbure (51') formée en reliant de manière appropriée l'extrémité inférieure desdites parties latérales (43, 48) respectivement du premier et du second élément annulaire (37, 47), ladite buse (75) étant aussi de forme annulaire.

8. Dispositif selon la revendication 7, caractérisé en ce que ladite buse (75) comprend deux troisièmes éléments annulaires (76, 77), l'un à l'intérieur de l'autre, et définissant entre eux un second canal (78) communiquant avec une source d'air portant des particules.

9. Dispositif selon la revendication 8, caractérisé en ce que ladite buse (75) est disposée dans la première cavité (51) de manière à se trouver près de la partie centrale (48) du second élément annulaire (47).

10. Dispositif selon l'une des revendications 8 ou 9, caractérisé en ce que lesdits troisièmes éléments annulaires (76, 77) sont supportés par une première plaque (58) placée sur le premier et le secdond élément annulaire (37, 47) et fixée à ces éléments de manière à ce que le premier élément annulaire (37) supporte le second élément annulaire (47) par l'intermédiaire de la première plaque (58).

11. Dispositif selon la revendication 10, caractérisé en ce qu'il comprend une seconde plaque (61) placée sur la première plaque (58) et dans laquelle est formé un quatrième trou (92) engrené par une partie (93) d'un quatrième tuyau de liaison (94) relié à la source d'air portant des particules, ce quatrième trou (92) étant en communication avec ledit second canal (78) par l'intermédiaire de plusieurs cinquièmes trous (82) formés dans la première plaque (58).

12. Dispositif selon la revendication 11, caractérisé en ce que au moins un sixième trou (96) est formé dans la seconde plaque (61) et engrené par une partie (97) d'un cinquième tuyau de liaison (98) relié à la source d'air filtré, ce sixième trou (96) étant en communication avec la première cavité (51) par l'intermédiaire de plusieurs septièmes trous (83, 84) formés dans la première plaque (58).

13. Dispositif selon la revendication 12, caractérisé en ce que la première plaque (58) a sur sa surface intérieure faisant face à ladite première cavité (51), une première rainure (73) dans laquelle sont fixées les extrémités supérieures desdits troisièmes éléments annulaires (76, 77), lesdits cinquièmes trous (82) étant formés dans cette rainure (73) et communiquant en-dessous avec le second canal (78) et au-dessus, par l'intermédiaire d'une seconde rainure annulaire (88) formée sur la surface inférieure de la seconde plaque (61), avec ledit quatrième trou (92) formé dans la seconde rainure (88).

14. Dispositif selon la revendication 13, caractérisé en ce que la première plaque (58) a, sur sa surface inférieure faisant face à ladite première cavité (51), au moins une troisième rainure annulaire (72, 74) concentrique à la première rainure (73) et ouverte vers la première cavité (51), lesdits septièmes trous (83, 84) étant formés dans cette troisième rainure annulaire (72, 74) et communiquant au-dessus, par l'intermédiaire d'une quatrième rainure annulaire (87, 91) formée dans la surface inférieure de la seconde plaque (61) concentriquement à la seconde rainure (88), ledit sixième trou (96) étant formé dans cette quatrième rainure (87, 91).